# EUROPÄISCHE PATENTANMELDUNG

(11) **EP 3 017 865 A1**
(43) Veröffentlichungstag der Anmeldung: **11.05.2016**
(21) Anmeldenummer: 15192635.9
(22) Anmeldetag: 02.11.2015
(51) Int. Cl.: B01J 14/00, C01B 11/02

(54) **CHLORDIOXIDANLAGE**

(30) Priorität: 07.11.2014 DE 102014222767
(71) Anmelder: Jürgen Löhrke GmbH, 23569 Lübeck (DE)
(72) Erfinder: LÖHRKE, Martin, 23611 Bad Schwartau (DE)
(74) Vertreter: Patentanwälte Vollmann & Hemmer

(57) **Zusammenfassung**

Chlordioxidanlage zum Erzeugen von Chlordioxid aus zwei Reaktanden mit zumindest drei Vorratsbehältern (2, 4, 6) für drei unterschiedliche Reaktanden, zumindest einem mit diesen Vorratsbehältern verbundenen Reaktor (14) sowie zumindest zwei ausgangsseitig des Reaktors angeordneten Vorlagebehältern (18, 20), welche mit dem Reaktor (14) zur Aufnahme des in dem Reaktor erzeugten Chlordioxids verbunden sind.

## Beschreibung

Die Erfindung betritt eine Chlordioxidanlage zum Erzeugen von Chlordioxid aus zwei Reaktanden.

Es sind Chlordioxidanlagen bekannt, bei welchen in einem Reaktor Natriumchlorit mit einer Säure wie Salzsäure, Schwefelsäure oder Phosphorsäure zu Chlordioxid reagiert. Aus dem Reaktor wird das so erzeugte Chlordioxid in einen Vorlagebehälter abgeleitet und dort gespeichert. Dies erfolgt vorzugsweise unter Zufuhr von Wasser, um das Chlordioxid um ein gewünschtes Maß zu verdünnen.

Derartige Anlagen, wie sie beispielsweise aus DE 102 11 169 A1 bekannt sind, werden beispielsweise zur Aufbereitung von Trinkwasser oder zur Desinfektion von Anlagen, beispielsweise in der Lebensmittelindustrie, eingesetzt. Bei der Desinfektion von Trinkwasser oder trinkwasserführenden Anlagen gelten spezielle Anforderungen an das erzeugte Chlordioxid, d. h. es muss Chlordioxid bestimmter Güte verwendet werden, so dass für derartige Anwendungen Chlordioxid in der Regel aus Natriumchlorit und Salzsäure spezieller Güte erzeugt wird. Das so erzeugte Chlordioxid hat jedoch den Nachteil, dass ein größerer Anteil von Chlorid entsteht, welches die Korrosion der Anlagen begünstigt. Daher wird in Anwendungsfällen, in denen kein Trinkwasser oder keine trinkwasserführenden Anlagen zu desinfizieren sind, vorzugsweise Chlordioxid aus Natriumchlorit und einer anderen Säure als Salzsäure, beispielsweise Schwefelsäure, Salpetersäure oder Phosphorsäure erzeugt, wobei weniger Chlorid entsteht und somit die Korrosionsgefahr reduziert ist.

Wenn beispielweise in einem Betrieb trinkwasserführende Anlagen und nicht trinkwasserführende Anlagen zu desinfizieren sind und Korrosion weitgehend vermieden werden soll, wären daher zwei Chlordioxidanlagen vorzuhalten, eine in welcher Chlordioxid mit Salzsäure für den Trinkwasserbereich erzeugt wird und eine in der Chlordioxid unter Verzicht auf Salzsäure für die übrigen Anlagenteile erzeugt wird. Dies ist mit erhöhten Anlagekosten verbunden.

Es ist daher Aufgabe der Erfindung, eine Chlordioxidanlage dahingehend zu verbessern, dass mit einer Anlage sowohl Chlordioxid für die Trinkwasserdesinfektion als auch Chlordioxid zur Desinfektion nicht trinkwasserführender Anlagen erzeugt werden kann.

Diese Aufgabe wird durch eine Chlordioxidanlage mit den in Anspruch 1 angegebenen Merkmalen gelöst. Bevorzugte Ausführungsformen ergeben sich aus den Unteransprüchen, der nachfolgenden Beschreibung sowie den Zeichnungen.

Die erfindungsgemäße Chlordioxidanlage ist zur Erzeugung von Chlordioxid aus zwei miteinander reagierenden Reaktanden ausgebildet. Dabei wird insbesondere Natriumchlorit mit einer geeigneten Säure, wie Salzsäure, Schwefelsäure, Salpetersäure, Phosphorsäure oder ähnlichem zu Chlordioxid reagiert. Im Unterschied zu den bekannten Chlordioxidanlagen weist die erfindungsgemäße Chlordioxidanlage trotz der Tatsache, dass nur zwei Reaktanden zu Chlordioxid reagiert werden, drei Vorratsbehälter für drei unterschiedliche Reaktanden auf. Ferner weist die Chlordioxidanlage zumindest einen Reaktor auf, welcher mit diesen Vorratsbehältern verbunden ist, so dass die jeweiligen Reaktanden aus den Vorratsbehältern dem Reaktor zugeführt werden können. Dabei ist zu verstehen, dass die Verbindungen zwischen den Vorratsbehältern und dem Reaktor jeweils so ausgebildet sind, dass diese geöffnet oder geschlossen werden können, um gezielt und dosiert Reaktanden dem Reaktor zuführen zu können. Ausgangsseitig des zumindest einen Reaktors sind erfindungsgemäß zumindest zwei voneinander getrennte Vorlagebehälter vorgesehen, welche mit dem Reaktor zur Aufnahme der in dem Reaktor erzeugten Chlordioxid verbunden sind.

Eine solche Anlage ermöglicht es z.B., in einem der Vorratsbehälter Natriumchlorit zu bevorraten und in den zwei anderen Vorratsbehältern Salzsäure und gegebenenfalls eine weitere Säure wie beispielsweise Schwefelsäure, Phosphorsäure, Salpetersäure oder ähnliche vorzuhalten. Je nachdem für welchen Zweck das Chlordioxid erzeugt werden soll, d. h. welche Güte das erzeugte Chlordioxid haben soll, kann dem Reaktor Natriumchlorit und Salzsäure oder Natriumchlorit und die andere Säure zugeführt werden. Um die verschiedenen Arten bzw. Güten von Chlordioxid getrennt vorhalten zu können, sind die zwei Vorlagebehälter vorgesehen. In dem einen Vorlagebehälter wird z.B. das Chlordioxid vorgehalten, welches mit Hilfe von Salzsäure, ggf. spezieller Güte für die Anwendung bei Trinkwasser, erzeugt wurde, während in dem anderen Vorlagebehälter das Chlordioxid vorgehalten werden kann, welches mit Hilfe der andern Säure erzeugt wurde. So wird eine Chlordioxidanlage geschaffen, welche es ermöglicht, in einer Anlage zwei verschiedene Arten von Chlordioxid zu erzeugen. Dies hat den Vorteil, dass gegenüber der Verwendung von zwei getrennten Chlordioxidanlagen verschiedene Anlageteile, wie beispielsweise ein zweiter Vorratsbehälter für Natriumchlorit und eine zweite Dosiereinrichtung für das Natriumchlorit sowie eine vollständig getrennte Steuereinrichtung und gegebenenfalls weitere Anlageteile eingespart werden können. So wird ein erheblicher Kostenvorteil gegenüber der Verwendung zweier separater Chlordioxidanlagen erreicht.

Bei der erfindungsgemäßen Chlordioxidanlage sind die Vorratsbehälter vorzugsweise über Dosiereinrichtung mit dem zumindest einen Reaktor verbunden. Über die Dosiereinrichtungen ist eine genaue Zudosierung der jeweiligen Reaktanden in den Reaktor möglich.

Die Vorlagebehälter sind vorzugsweise jeweils über ein Absperrventil mit dem zumindest einen Reaktor verbunden. So kann das in dem Reaktor erzeugte Chlordioxid gezielt in die Vorlagebehälter angeführt werden und insbesondere definiert in einen gewünschten der Vorlagebehälter geleitet werden.

Gemäß einer weiteren möglichen Ausführungsform der Erfindung weist die Chlordioxidanlage zwei Reaktoren auf, wobei ein erster der Vorratsbehälter mit beiden Reaktoren verbunden ist und ein zweiter und ein dritter der Vorratsbehälter jeweils nur mit einem der Reaktoren verbunden sind. Das bedeutet, dass im Betrieb der Chlordioxidanlage die Reaktanden aus dem zweiten und dritten Vorratsbehälter jeweils nur einen der Reaktoren zugeführt werden. So kann ein in dem ersten Vorratsbehälter vorhandener Reaktand in beiden Reaktoren zum Einsatz kommen, während die in dem zweiten und dem dritten Vorratsbehälter vorgehaltenen Reaktanden jeweils nur in einem der Reaktoren zum Einsatz kommen. So kann beispielsweise einer der Reaktoren ausschließlich dafür genutzt werden, Chlordioxid aus Natriumchlorit und Salzsäure zu erzeugen, während der andere Reaktor dafür genutzt wird, Chlordioxid aus Natriumchlorit und einer anderen Säure, wie beispielweise Schwefelsäure, Salpetersäure oder Phosphorsäure zu erzeugen. So wird z.B. sichergestellt, dass das Chlordioxid, welches für die Trinkwasseraufbereitung vorgesehen ist und vorzugsweise aus Natriumchlorit und Salzsäure erzeugt wird, nicht durch andere Stoffe verunreinigt wird, da diejenigen Anlagenteile, in welchen die nicht für die Chlordioxiderzeugung zur Trinkwasseraufbereitung geeigneten Reaktanden zum Einsatz kommen bzw. Endprodukte dieser Reaktanden enthalten sein können, vollständig von den Anlagenteilen getrennt sind, in welchen das Chlordioxid für die Trinkwasseraufbereitung erzeugt und vorgehalten wird.

Bei der Verwendung zweier Reaktoren kann der erste Vorratsbehälter über separate Dosiereinrichtungen mit den beiden Reaktoren verbunden sein, das heißt für jeden der Reaktoren kann eine eigene Dosiereinrichtung zur Dosierung des Reaktanden aus dem ersten Vorratsbehälter vorgesehen sein. Allerdings ist es bevorzugt, hier lediglich eine Dosiereinrichtung, beispielsweise lediglich eine Dosierpumpe vorzusehen. So ist der erste Vorratsbehälter bevorzugt über eine gemeinsame Dosiereinrichtung, insbesondere Dosierpumpe mit beiden Reaktoren verbunden, wobei zumindest einer der Reaktoren mit der gemeinsamen Dosiereinrichtung über ein Ventil verbunden ist, welches es ermöglicht, diese Verbindung zu öffnen und zu schließen. Besonders bevorzugt ist jeder der Reaktoren über ein Ventil mit der gemeinsamen Dosiereinrichtung verbunden, so dass über die gemeinsame Dosiereinrichtung, unter Betätigung der Ventile, gezielt der Reaktand aus dem ersten Vorratsbehälter in den gewünschten der Reaktoren dosiert werden kann. Anstelle zweier getrennter Ventile kann auch ein Umschaltventil ausgangsseitig der gemeinsamen Dosiereinrichtung angeordnet sein, welches es ermöglicht, zwischen zwei Strömungswegen zu den zwei Reaktoren umzuschalten.

Wenn die Anlage zwei Reaktoren aufweist, ist es weiter bevorzugt, dass jeweils ein Vorlagebehälter lediglich mit einem der Reaktoren verbunden ist. Das heißt ein erster Vorlagebehälter ist mit dem ersten Reaktor verbunden, während ein zweiter Vorlagebehälter mit dem zweiten Reaktor verbunden ist. So ist sichergestellt, dass das in dem ersten Reaktor erzeugte Chlordioxid nur in den ersten Vorlagebehälter geleitet werden kann, während das in dem zweiten Reaktor erzeugte Chlordioxid nur in den zweiten Vorlagebehälter geleitet werden kann. So sind beginnend mit den Reaktoren und stromabwärts von diesen die chlordioxidführenden Anlagenteile für zwei verschiedene Sorten von Chlordioxid vollständig voneinander getrennt.

Wie oben beschrieben, ist die erfindungsgemäße Chlordioxidanlage bevorzugt so ausgestaltet bzw. wird bevorzugt derart verwendet, dass der erste Vorratsbehälter zur Aufnahme von Natriumchlorit vorgesehen ist bzw. dient, ein zweiter Vorratsbehälter zur Aufnahme von Salzsäure vorgesehen ist bzw. dient und ein dritter Vorratsbehälter zur Aufnahme einer weiteren Säure vorgesehen ist bzw. dient. Das heißt im Betrieb der erfindungsgemäßen Chlordioxidanlage ist in dem ersten Vorratsbehälter Natriumchlorit, in dem zweiten Vorratsbehälter Salzsäure und in dem dritten Vorratsbehälter eine weitere Säure bevorratet. Diese weitere Säure kann insbesondere Schwefel-, Phosphorsäure, Salpetersäure oder eine andere geeignete Säure sein.

Weiter bevorzugt weist die erfindungsgemäße Chlordioxidanlage eine Steuereinrichtung auf, welche die Dosierung der Reaktanden steuert. Dabei ist die Steuereinrichtung so ausgebildet, dass sie zum Erzeugen von Chlordioxid Natriumchlorit und Salzsäure in einen Reaktor oder Natriumchlorit und die weitere Säure in einen Reaktor der Chlordioxidanlage leitet. Im Falle, dass die Anlage nur einen Reaktor aufweist, ist dies derselbe Reaktor. Sind zwei Reaktoren vorgesehen, wird die Salzsäure stets dem einen Reaktor und die weitere Säure stets dem anderen Reaktor zugeführt.

Entsprechend ist die Chlordioxidanlage weiter bevorzugt so ausgebildet bzw. wird weiter bevorzugt derart verwendet, dass ein erster der Vorlagebehälter zur Aufnahme eines aus Natriumchlorit und Salzsäure erzeugten Chlordioxids und ein zweiter der Vorlagebehälter zur Aufnahme eines aus Natriumchlorit und der weiteren Säure erzeugten Chlordioxids vorgesehen ist.

Weiter bevorzugt weist die Chlordioxidanlage eine Wasserzufuhr auf, welche mit dem oder den Reaktoren verbindbar ist, um das im Reaktor erzeugte Chlordioxid bei gleichzeitiger Verdünnung in einen der Vorlagebehälter zu spülen.

Ferner weist die Chlordioxidanlage vorzugsweise eine Steuereinrichtung auf, welche die Zufuhr der Reaktanden in den zumindest einen Reaktor und ein Ablassen des in dem zumindest einen Reaktor erzeugten Chlordioxids in einen der Vorlagebehälter steuert, wobei die Vorlagebehälter vorzugsweise jeweils mit einer Füllstanderfassungseinrichtung versehen sind und die Steuereinrichtung so ausgebildet ist, dass sie in Abhängigkeit des erfassten Füllstandes die Erzeugung des Chlordioxids in dem zumindest einen Reaktor veranlasst. Die Steuereinrichtung ist vorzugsweise mit den Dosiereinrichtungen und erforderlichen Ventilen zu deren Ansteuerung verbunden, so dass die Steuereinrichtung die Dosiereinrichtungen steuern bzw. aktivieren und vorhandene Ventile öffnen und schließen bzw. umschalten kann, um die Flüssigkeitsströme in der Anlage wie gewünscht zu steuern. So können die Reaktanden in der oben beschriebenen Weise dem einen oder den mehreren Reaktoren dosiert zugeführt werden. Ferner kann durch Öffnen und Schließen geeigneter Ventile in der Verbindung zwischen Reaktor und Vorlagebehälter das erzeugte Chlordioxid gezielt in den gewünschten Vorlagebehälter abgeführt bzw. abgeleitet werden.

Das bedeutet, die Steuereinrichtung ist bevorzugt so ausgebildet, dass sie die Verwendung der Chlordioxidanlage in der vorangehend beschriebenen Weise ermöglicht.

Nachfolgend wird die erfindungsgemäße Chlordioxidanlage beispielhaft anhand der beigefügten Figuren beschrieben. In diesen zeigt:
- Fig. 1: einen Anlagen- bzw. Verfahrensschema einer Chlordioxidanlage gemäß einer ersten Ausführungsform der Erfindung und
- Fig. 2: einen Anlagen- bzw. Verfahrensschema einer Chlordioxidanlage gemäß einer zweiten Ausführungsform der Erfindung.

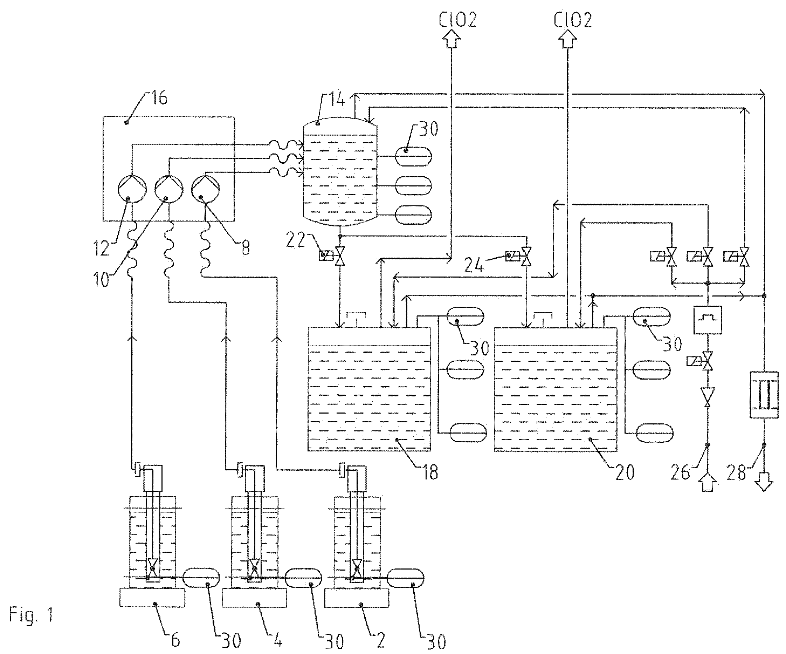

Die in Fig. 1 schematisch gezeigte Chlordioxidanlage weist drei Vorratsbehälter 2, 4, und 6 auf. Der Vorratsbehälter 2 ist über eine Dosierpumpe 8, der Vorratsbehälter 4 über eine Dosierpumpe 10 und der Vorratsbehälter 6 über eine Dosierpumpe 12 mit einem Reaktor 14 verbunden. So sind die Dosierpumpen 8, 10 und 12 in der Lage, die in den Vorratsbehältern 2, 4 und 6 bevorrateten Reaktanden in den Reaktor 14 zu fördern bzw. in den Reaktor 14 zu dosieren. Die Dosierpumpen 8, 10, 12 werden dazu von einer Steuereinrichtung bzw. Steuerung 16 angesteuert. In der hier gezeigten Chlordioxidanlage ist der Vorratsbehälter 2 dafür vorgesehen, Natriumchlorit (NaClO2) aufzunehmen. Der zweite Vorratsbehälter 4 ist dafür vorgesehen, Salzsäure (HCl) aufzunehmen, insbesondere Salzsäure spezieller Güte für die Anwendung im Zusammenhang mit Trinkwasser. Der dritte Vorratsbehälter 6 ist dafür vorgesehen, eine alternative Säure, wie beispielsweise Schwefel-, Phosphor- oder Salpetersäure aufzunehmen.

In dem Reaktor 14 wird Chlordioxid erzeugt, indem entweder Natriumchlorit aus dem Vorratsbehälter 2 mit Salzsäure aus dem Vorratsbehälter 4 reagiert oder Natriumchlorit aus dem Vorratsbehälter 2 mit der Säure aus dem Vorratsbehälter 6 reagiert. Wenn Chlordioxid aus Natriumchlorit und Salzsäure erzeugt werden soll, wird entsprechend über die Steuerung 16 veranlasst, dass die Dosierpumpen 8 und 10 diese beiden Reaktanden in den Reaktor 14 fördern. Soll in dem Reaktor 14 Natriumchlorit mit der Säure aus dem Vorratsbehälter 6 zur Erzeugung von Chlordioxid reagieren, werden diese beiden Reaktanden von den Dosierpumpen 8 und 12 in den Reaktor 14 gefördert. Die Steuerung 16 steuert dazu die Dosierpumpen 8 und 12 entsprechend an.

Ausgangsseitig des Reaktors sind zwei Vorlagebehälter 18 und 20 angeordnet, wobei in der Verbindungsleitung zwischen dem Reaktor 14 und dem ersten Vorlagebehälter 18 ein Absperrventil 22 und in der Verbindungsleitung zwischen dem Reaktor 14 und dem zweiten Vorlagebehälter 20 ein Absperrventil 24 angeordnet ist. Die Absperrventile 22 und 24 können z.B. elektromagnetisch oder -motorisch betätigt und auch von der Steuerung 16 ansteuerbar sein. Die Absperrventile 22 und 24 dienen dazu, das in dem Reaktor 14 erzeugte Chlordioxid wahlweise in den Vorlagebehälter 18 oder den Vorlagebehälter 20 zu leiten. Wenn das Absperrventil 22 geöffnet ist und das Absperrventil 24 geschlossen ist, wird das Chlordioxid in den ersten Vorlagebehälter 18 geleitet. Umgekehrt wird, wenn das Absperrventil 22 geschlossen und das Absperrventil 24 geöffnet ist, das erzeugte Chlordioxid in den zweiten Vorlagebehälter 20 geleitet. Beim Ablassen des erzeugten Chlordioxids aus dem Reaktor 14 in einen der Vorlagebehälter 18 oder 20 wird in bekannter Weise über eine Frischwasserleitung 26 Wasser in den Reaktor 14 geleitet, um das Chlordioxid aus dem Reaktor 14 auszuspülen und gleichzeitig zu verdünnen. Zur Verdünnung kann Frischwasser ebenfalls den Vorlagebehälter 18 und 20 über Betätigung der dazu vorhandenen Ventile zugeleitet werden. Der Reaktor 14 und die Vorlagebehälter 18, 20 sind darüber hinaus in diesem Beispiel mit einer Entlüftung 28 verbunden.

Die zwei Vorlagebehälter 18 und 20 werden dazu genutzt, die zwei unterschiedlich erzeugten Arten von Chlordioxid getrennt voneinander zu bevorraten. So kann in dem ersten Vorlagebehälter 18 das Chlordioxid gespeichert bzw. gesammelt werden, welches in der ersten Reaktion durch Natriumchlorit und Salzsäure erzeugt wird. Dieses Chlordioxid ist vorzugsweise für die Desinfektion von Trinkwasser oder trinkwasserführenden Anlagen vorgesehen. In dem zweiten Vorlagebehälter 20 wird dasjenige Chlordioxid gesammelt bzw. gespeichert, welches durch Revorgehaltenen Säure erzeugt wird. Dies ist dann ein Chlordioxid, welches für die Trinkwasseraufbereitung und Desinfektion von trinkwasserführenden Leitungsteilen nicht geeignet ist, aber zur Desinfektion anderer Anlagenteile eingesetzt werden kann. Aus den Vorlagebehältern 18 und 20 wird das Chlordioxid (ClO2) dann jeweils den zu desinfizierenden Anlagen zugeführt, welche hier nicht gezeigt sind.

Mit der in Fig. 1 gezeigten Chlordioxidanlage ist es möglich, in einer Anlage auf zwei verschiedene Weisen Chlordioxid zu erzeugen, nämlich einmal durch Reaktion von Natriumchlorit und Salzsäure und einmal durch Reaktion von Natriumchlorit und einer alternativen Säure. Das Chlordioxid wird dabei immer lediglich aus zwei Reaktanden erzeugt. Bei diesem Ausführungsbeispiel wird für die zwei unterschiedlichen Reaktionen derselbe Reaktor 14 verwendet. Allerdings wird das erzeugte Chlordioxid, je nachdem in welcher Reaktion es erzeugt wurde, getrennt in den zwei verschiedenen Vorlagebehältern 18 und 20 gesammelt und bevorratet.

Die Vorratsbehälter 2, 4, 6, der Reaktor 14 sowie die Vorlagebehälter 18 und 20 sind mit Füllstanderfassungseinrichtungen bzw. Füllstandsensoren 30 versehen, welche den in dem jeweiligen Behälter vorhandenen Füllstand an die Steuereinrichtung bzw. Steuerung 16 melden, welche die Anlage dann in Abhängigkeit der Füllstände steuert. Sinkt der Füllstand in einem der Vorlagebehälter 18, 20 unter ein Minimum, veranlasst die Steuereinrichtung 16 über die Betätigung der entsprechenden Dosierpumpen 8, 10, 12 die Erzeugung von Chlordioxid durch die jeweils gewünschte Reaktion im Reaktor 14 und leitet dann durch Betätigung der Absperrventile 22 und 24 das so erzeugte Chlordioxid in den jeweils zugehörigen Vorlagebehälter 18, 20. Die Füllstandsensoren 30 an dem Reaktor 14 können genutzt werden, um die gewünschte Füllung des Reaktors, insbesondere mit zugeführtem Wasser zu überwachen. Die Füllstandsensoren 30 der Vorratsbehälter 2, 4 und 6 dienen dazu, ein Minimum, welches ein Auffüllen der Vorratsbehälter erforderlich macht, zu signalisieren.

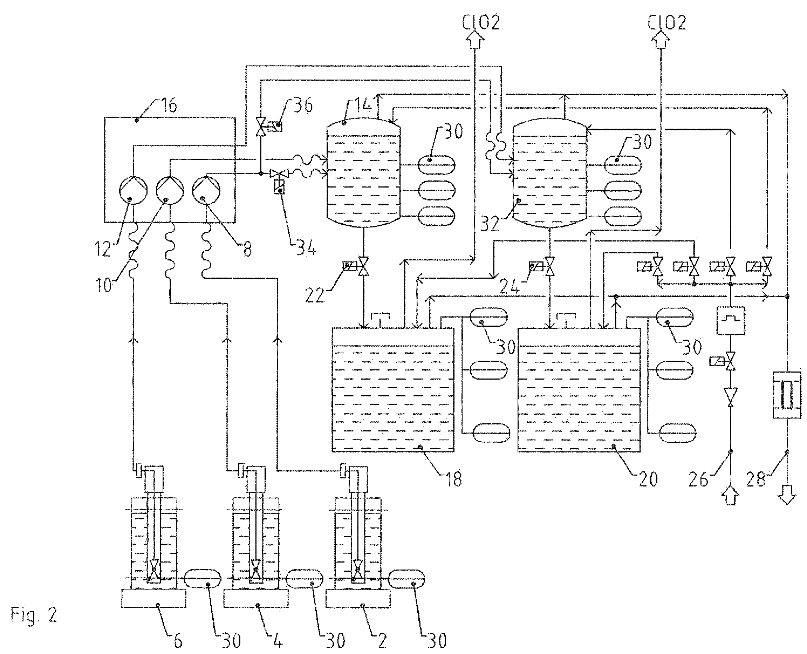

Die Chlordioxidanlage gemäß Fig. 2 unterscheidet sich von der Chlordioxidanlage gemäß Fig. 1 darin, dass ein zweiter Reaktor 32 vorgesehen ist. D. h. hier werden die zwei unterschiedlichen chemischen Reaktionen zur Erzeugung von Chlordioxid nicht in demselben Reaktor 14 sondern in unterschiedlichen Reaktoren 14 und 32 durchgeführt. Der erste Reaktor 14 dient dazu, in seinem Inneren Natriumchlorit und Salzsäure zu Chlordioxid zu reagieren, während der zweite Reaktor 32 dazu verwendet wird, Natriumchlorit mit der zweiten im Vorratsbehälter 6 gespeicherten alternativen Säure, beispielsweise Schwefelsäure, Phosphorsäure oder Salpetersäure zu reagieren. Entsprechend ist bei diesem Ausführungsbeispiel der erste Vorlagebehälter 18 über das Absperrventil 22 mit dem ersten Reaktor 14 verbunden, während der zweite Vorlagebehälter 20 über das Absperrventil 24 lediglich mit dem zweiten Reaktor 32 verbunden ist.

Der erste Vorratsbehälter 2 ist über die erste Dosierpumpe 8 mit beiden Reaktoren 14 und 32 verbunden, wobei in der Verbindung zwischen der Dosierpumpe 8 und dem ersten Reaktor 14 ein Absperrventil 34 und in der Verbindung von der Dosierpumpe 8 zu dem zweiten Reaktor 32 ein Absperrventil 36 angeordnet ist. Die Absperrventile 34 und 36 sind wie die Absperrventile 22 und 24 mit einem geeigneten elektrischen, hydraulischen oder pneumatischen Antrieb versehen und über die Steuereinrichtung 16 ansteuerbar. So kann durch entsprechende Betätigung der Absperrventile 34 und 36 das von der ersten Dosierpumpe 8 aus dem ersten Vorratsbehälter 2 geförderte Natriumchlorit wahlweise dem ersten Reaktor 14 oder dem zweiten Reaktor 32 zugeführt werden. Ist das Absperrventil 34 geöffnet und das Absperrventil 36 geschlossen, fördert die Dosierpumpe 8 das Natriumchlorit in den ersten Reaktor 14. Ist umgekehrt das Absperrventil 36 geöffnet und das Absperrventil 34 geschlossen, wird das Natriumchlorit von der Dosierpumpe 8 in den zweiten Reaktor 32 gefördert. Anstelle der zwei Absperrventile 34 und 36 könnte auch ein Umschaltventil Verwendung finden.

Der zweite Vorratsbehälter 4 ist über die zweite Dosierpumpe 10 ausschließlich mit dem ersten Reaktor 14 verbunden, während der dritte Vorratsbehälter 6 über die dritte Dosierpumpe 12 ausschließlich mit dem zweiten Reaktor 32 verbunden ist. So kann über die zweite Dosierpumpe 10 die Salzsäure aus dem zweiten Vorratsbehälter 4 lediglich in den ersten Reaktor 14 gefördert werden, während die zweite alternative Säure aus dem dritten Vorratsbehälter 6 über die dritte Dosierpumpe 12 ausschließlich in den zweiten Reaktor 32 gefördert werden kann.

Die in Fig. 2 gezeigte Chlordioxidanlage hat den Vorteil, dass nicht für beide chemische Reaktionen derselbe Reaktor 14 verwendet wird, sodass verhindert werden kann, dass das für die Trinkwasseraufbereitung bzw. die Desinfektion von trinkwasserführenden Anlagen vorgesehene Chlordioxid durch unerwünschte Produkte, welche bei der alternativen zweiten chemischen Reaktion anfallen, verunreinigt wird. In der Anlage gemäß Fig. 2 sind sämtliche Teile, in welchen die zweite alternative Säure Verwendung findet, vollständig von denjenigen Anlagenteilen getrennt, in welchen Salzsäure zur Erzeugung von Chlordioxid verwendet wird. Im Übrigen entspricht der Aufbau der Chlordioxidanlage gemäß Fig. 2 der Anlage in Fig. 1, sodass diesbezüglich auf die obige Beschreibung verwiesen wird.

### Bezugszeichenliste

- 2, 4, 6: Vorratsbehälter
- 8, 10, 12: Dosierpumpen
- 14: Reaktor
- 16: Steuerung
- 18, 20: Vorlagebehälter
- 22, 24: Absperrventile
- 26: Frischwasserleitung
- 28: Entlüftung
- 30: Füllstandsensoren
- 32: zweiter Reaktor
- 34, 36: Absperrventile

## Patentansprüche

1. Chlordioxidanlage zum Erzeugen von Chlordioxid aus zwei Reaktanden mit zumindest drei Vorratsbehältern (2, 4, 6) für drei unterschiedliche Reaktanden, zumindest einem mit diesen Vorratsbehältern verbundenen Reaktor (14) sowie zumindest zwei ausgangsseitig des Reaktors angeordneten Vorlagebehältern (18, 20), welche mit dem Reaktor (14) zur Aufnahme des in dem Reaktor erzeugten Chlordioxids verbunden sind.

2. Chlordioxidanlage nach Anspruch 1, bei welcher die Vorratsbehälter über Dosiereinrichtungen, insbesondere Dosierpumpen (8, 10, 12) mit dem Reaktor verbunden sind.

3. Chlordioxidanlage nach Anspruch 1 oder 2, bei welcher die Vorlagebehälter (18, 20) jeweils über ein Absperrventil (22, 24) mit dem zumindest einen Reaktor verbunden sind.

4. Chlordioxidanlage nach einem der vorangehenden Ansprüche, welche zwei Reaktoren (14, 32) aufweist, wobei ein erster 82) der Vorratsbehälter mit beiden Reaktoren (14, 32) verbunden ist und ein zweiter (4) und ein dritter (6) der Vorratsbehälter jeweils nur mit einem der Reaktoren (14, 32) verbunden sind.

5. Chlordioxidanlage nach Anspruch 4, bei welcher der erste Vorratsbehälter (2) mit jedem der Reaktoren (14, 32) über eine separate Dosiereinrichtung verbunden ist.

6. Chlordioxidanlage nach Anspruch 4, bei welcher der erste Vorratsbehälter (2) über eine gemeinsame Dosiereinrichtung (8) mit beiden Reaktoren (14, 32) verbunden ist, wobei zumindest einer der Reaktoren (14, 32) mit der gemeinsamen Dosiereinrichtung (8) über ein Ventil (34, 36) verbunden ist, welches es ermöglicht, diese Verbindung zu öffnen und zu schließen.

7. Chlordioxidanlage nach einem der Ansprüche 4 bis 6, bei welcher jeweils ein Vorlagebehälter (18, 20) lediglich mit einem der Reaktoren (14, 32) verbunden ist.

8. Chlordioxidanlage nach einem der vorangehenden Ansprüche, bei welcher ein erster Vorratsbehälter (2) zur Aufnahme von Natriumchlorit, ein zweiter Vorratsbehälter (4) zur Aufnahme von Salzsäuere und ein dritter Vorratsbehälter (6) zur Aufnahme einer weiteren Säure, insbesondere Schwefel- oder Phosphorsäure vorgesehen ist.

9. Chlordioxidanalage nach Anspruch 8, bei welcher ein erster (18) der Vorlagebehälter zur Aufnahme eines aus Natriumchlorit und Salzsäure erzeugten Chlordioxids und ein zweiter (20) der Vorlagebehälter zur Aufnahme eines aus Natriumchlorit und der weiteren Säure erzeugten Chlordioxids vorgesehen sind.

10. Chlordioxidanlage nach einem der vorangehenden Ansprüche, welche eine Wasserzufuhr (26) aufweist, welche mit dem oder den Reaktoren (14, 32) verbindbar ist, um das im Reaktor (14, 32) erzeugte Chlordioxid bei gleichzeitiger Verdünnung in einen der Vorlagebehälter (18, 20) zu spülen.

11. Chlordioxidanlage nach einem der vorangehenden Ansprüche, welche eine Steuereinrichtung (16) aufweist, welche die Zufuhr der Reaktanden in den zumindest einen Reaktor (14, 32) und ein Ablassen des in dem zumindest einen Reaktor (14, 32) erzeugten Chlordioxid in einen der Vorlagebehälter (18, 20) steuert, wobei die Vorlagebehälter (18, 20) vorzugsweise jeweils mit einer Füllstanderfassungseinrichtung (36) versehen sind und die Steuereinrichtung (16) so ausgebildet ist, dass sie in Abhängigkeit des erfassten Füllstandes die Erzeugung des Chlordioxids in dem zumindest einen Reaktor (14, 32) veranlasst.
